# EUROPEAN PATENT APPLICATION

(11) **EP 2 221 421 A2**
(43) Date of publication of application: **25.08.2010**
(21) Application number: 09172620.8
(22) Date of filing: 09.10.2009
(51) Int. Cl.: E03F 1/00, E03F 7/02

(54) **Waste discharge valve for vacuum-conveyance waste collection system**

(30) Priority: 24.02.2009 KR 20090015147
(71) Applicant: Kolon Construction Co., Ltd, Gyeonggi-do 427-709 (KR); Eunsung Plant Co., Ltd, Jungwang-dong Siheung-si, Gyeonggi-do 429-932 (KR)
(72) Inventor: Kang, Seung-Hyun, 448-727, Yongin-si, Gyeonggi-do (KR); Hwang, Jong-Kyu, 431-771, Anyang-si, Gyeonggi-do (KR); Jung, Yun-Ho, 442-873, Suwon-si, Gyeonggi-do (KR); Chang, Sang-Bong, 137-140, Seoul (KR)
(74) Representative: Leman Consulting S.A.

(57) **Abstract**

There is provided a waste discharge valve for a vacuum-conveyance waste collection system in which waste put in a waste receiving device is automatically conveyed to a central waste collection station through a conveying line.

In the vacuum-conveyance waste collection system in which a housing includes an upper end on which a waste receiving opening is formed and a lower end which is connected to a conveying line connected to a central waste collection station, and a chute is installed in the housing, temporality stores waste and guides the waste to the conveying line, the waste discharge valve is installed at a lower end of the chute and comprises: an air cylinder; a first link plate connected to one end of a cylinder rod of the air cylinder; a damper arm for opening/closing the waste discharge valve by pivot; and a second link plate pivotally connected to the first link plate and the damper arm so that the opening/closing of the waste discharge valve is controlled, and wherein the chute includes an airline with an upper air inlet, a middle air outlet and a lower air outlet.

## Description

### CROSS-REFERENCE TO RELATED APPLICATION

This application claims the benefit of Korean Patent Application No. 2009-0015147, filed February 24, 2009, the disclosure of which is hereby incorporated herein by reference in its entirety.

### BACKGROUND OF THE INVENTION

### 1. Field of the Invention

The present invention relates to a waste discharge valve for a vacuum-conveyance waste collection system (i.e., waste transfer system), and more particularly, to a waste discharge valve installed in a vacuum-conveyance waste collection system in which waste being put into a waste receiving device is automatically conveyed to a central waste collection station, along a conveying line.

### 2. Description of the Related Art

In general, a vacuum-conveyance waste collection system (i.e., a waste transfer system) is installed in a housing development area. In this system using the same principle as that of a vacuum cleaner used at home, when waste is put into a waste receiving device installed at a certain place, the waste is conveyed from the waste receiving device to a central waste collection station through an underground line, by a computer control system. This system has a waste discharge valve to discharge the waste put into the waste receiving devices installed at a number of places to a waste conveying line connected to the central waste collection station.

In a generally used conventional hinge-type waste discharge valve using a cantilever, when an operation means including an air cylinder or the like is operated, the waste discharge valve is opened/closed by rotating around a hinge shaft (a shaft of a damper arm). However, when a part to connect the operation means (air cylinder) and a compressed air supply pipe is missed or separated, compressed air is not supplied to the operation means (air cylinder), thus failing to keep the close state of the waste discharge valve. When the waste put into the waste receiving device is placed on the waste discharge valve, the waste is to be temporarily stored on the waste discharge valve. However, since the waste discharge valve is open due to the aforementioned malfunction, the waste vertically drops into the conveying line and thus it may not be conveyed.

In the case where the waste drops into the convey line, the waste convey line is blocked. To fix this problem, the operation of the system has to be stopped and repaired and additionally people need to take out the waste which is not conveyed. Furthermore, the system cannot be used until the repair work is finished and the system repairing cost and service fees are increased.

### SUMMARY OF THE INVENTION

Therefore, it is an object of the present invention to provide a waste discharge valve for a vacuum-conveyance waste collection system (waste transfer system), in which the waste discharge valve is not randomly opened even if an operation means (air cylinder) for opening/closing a hinge-type waste discharge valve using a cantilever malfunctions.

In accordance with an embodiment of the present invention, there is provided a waste discharge valve for a vacuum-conveyance waste collection system (waste transfer system) in which a housing includes an upper end on which a waste receiving opening is formed and a lower end which is connected to a conveying line connected to a central waste collection station, and a chute is installed in the housing, temporality stores waste and guides the waste to the conveying line, the waste discharge valve is installed at a lower end of the chute and comprises: an air cylinder; a first link plate connected to one end of a cylinder rod of the air cylinder; a damper arm for opening/closing the waste discharge valve by pivot; and a second link plate pivotally connected to the first link plate and the damper arm so that the opening/closing of the waste discharge valve is controlled, and wherein the chute includes an airline with an upper air inlet, a middle air outlet and a lower air outlet.

Preferably, the first link plate is in a triangle shape. At the apexes of the triangle, the first link plate is pivotally connected to a link bracket which is operatively fixed with the cylinder rod of the air cylinder, the second link plate and a chute bracket in a single body. A slot in an arc shape is formed proximately to the position on which the first link plate is pivotally connected to the link bracket. Therefore, as the first link plate pivots, a pin fixedly installed at the link bracket is guided within the slot. Both ends of the second link plate are pivotally connected to the first link plate and the damper arm, respectively.

### BRIEF DESCRIPTION OF THE DRAWINGS

The above and other features and advantages of the present invention will become more apparent to those of ordinary skill in the art by describing in detail preferred embodiments thereof with reference to the attached drawings in which:
FIG. 1 is an entire sectional view illustrating a waste collection system including a waste discharge valve according to the present invention;
FIG. 2 is a sectional view illustrating the waste discharge valve being closed;
FIG. 3 is a sectional view illustrating the waste discharge valve being open;
FIG. 4 is a side view illustrating a first link plate in the waste discharge valve; and
FIG. 5 is a side view illustrating a damper arm in the waste discharge valve.

### [Description of reference numbers of major elements]

| | |
|---|---|
| 1: waste receiving device | 2: waste receiving opening |
| 10: housing | 20: chute |
| 201: airline | 202: upper air inlet |
| 203: middle air outlet | 204: lower air outlet |
| 205: flange | 206: rubber packing |
| 30: discharge valve | 301: damper arm |
| 302: under damper | 301a: upward protrusion |
| 301b: first connection shaft | 301c: second connection shaft |
| 301d: third connection shaft | |
| 401: second link plate | 402: first link plate |
| 402a: first connection part | 402b: second connection part |
| 402c: third connection part | 402d: slot |
| 41: link bracket | 41a: pin |
| 42: chute bracket | 411, 421: pin holes |
| 43: air cylinder | 431: cylinder rod |
| 432, 433: compressed air supply valves | |
| 44: cylinder bracket | |
| 50: conveying line | 60: manhole for inspection |
| 601: inspection opening | 602: conveying line inspection opening |
| 603: inspection gate | |

### DETAILED DESCRIPTION OF THE PREFERRED EMBODIMENT

The present invention will now be described more fully hereinafter with reference to the accompanying drawings, in which preferred embodiments of the invention are shown. However, it is to be understood that the scope of the invention is not limited to the disclosed embodiments.

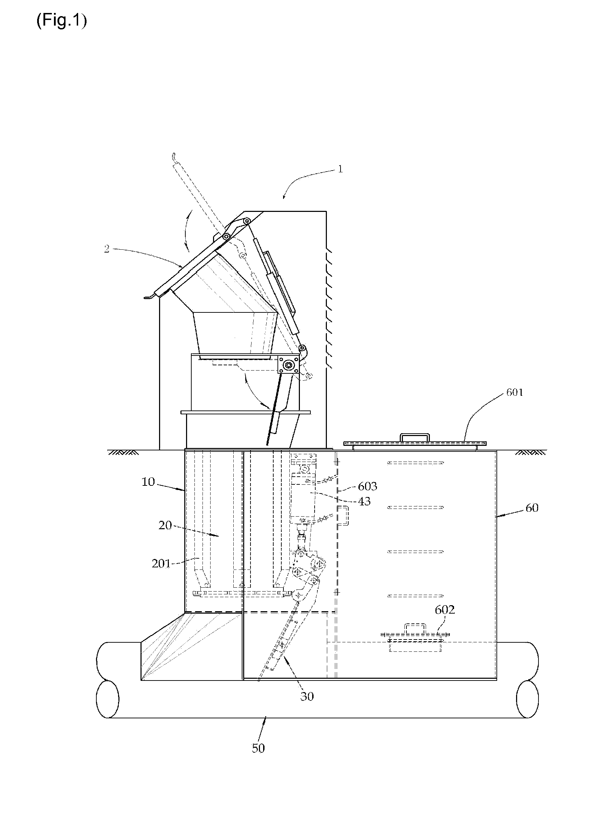

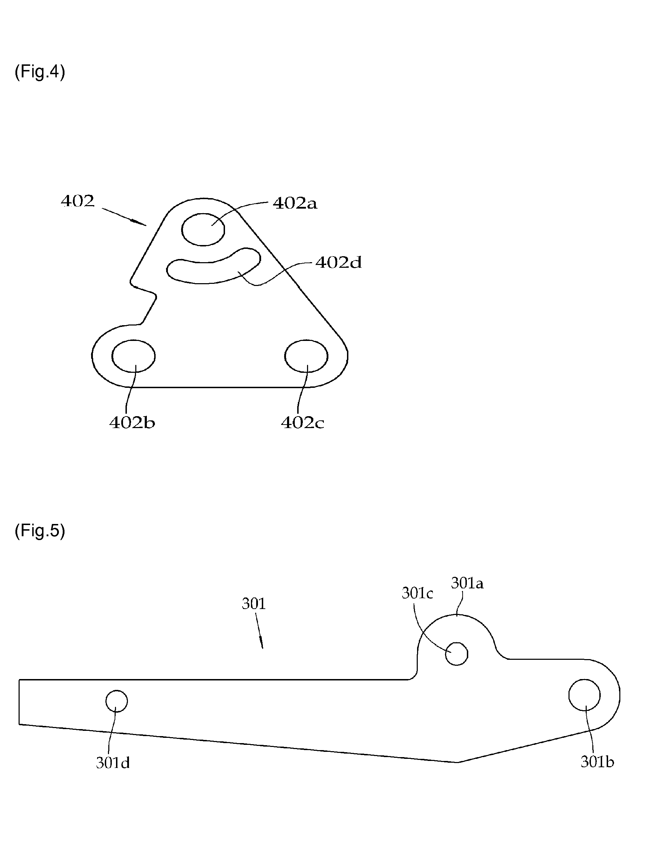

A waste discharge valve for a vacuum-conveyance waste collection system according to the present invention will be described with reference to FIGS. 1 through 5.

In general, a vacuum-conveyance waste collection system (i.e., a waste transfer system) is installed in a housing development area. In this system using the same principle as that of a vacuum cleaner used at home, when waste is put into a waste receiving opening 2 of a waste receiving device 1 installed at a certain place, the waste is conveyed from the waste receiving device to a central waste collection station through a conveying line 50 buried underground, by a computer control system. This system has a waste discharge valve 30 to discharge the waste put into the waste receiving openings 2 of the waste receiving devices 1 installed at a number of places to the waste conveying line 50 connected to the central waste collection station.

In a vacuum-conveyance waste collection system according to the present invention, a housing 10 includes an upper end on which a waste receiving opening 2 is formed and a lower end which is connected to a conveying line 50 connected to a central waste collection station, and a chute 20 is installed in the housing 10, temporality stores waste and guides the waste to the conveying line 50. A waste discharge valve 30 for the vacuum-conveyance waste collection system according to the present invention, which is installed at a lower end of the chute 20, comprises: an air cylinder 43; a first link plate 402 connected to one end of a cylinder rod 431 of the air cylinder 43; a damper arm 301 for opening/closing the waste discharge valve 30 by pivot; and a second link plate 401 pivotally connected to the first link plate 402 and the damper arm 301 so that the opening/closing of the waste discharge valve 30 is controlled, and wherein the chute 20 includes an airline 201 with an upper air inlet 202, a middle air outlet 203 and a lower air outlet 204.

As illustrated in FIG. 1, the housing 10 and a manhole 60 for inspection are formed together in a single unit. An inspection opening 601 is formed at an upper end of the manhole 60, a conveying line inspection opening 602 is formed at a lower end of the manhole 60, and a waste discharge valve inspection gate 603 is installed at an inner side surface of the manhole 60. The inspection opening 601, the conveying line inspection opening 602 and the waste discharge valve inspection gate 603 make it easy to maintain, manage and inspect the waste discharge valve 30 and the conveying line 50. These are closed when the waste collection system is normal and these are opened when management and inspection are needed.

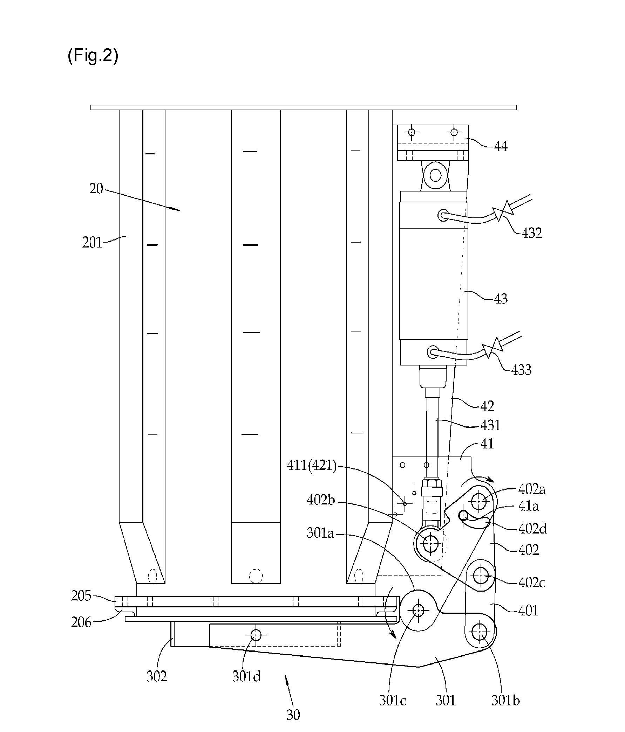

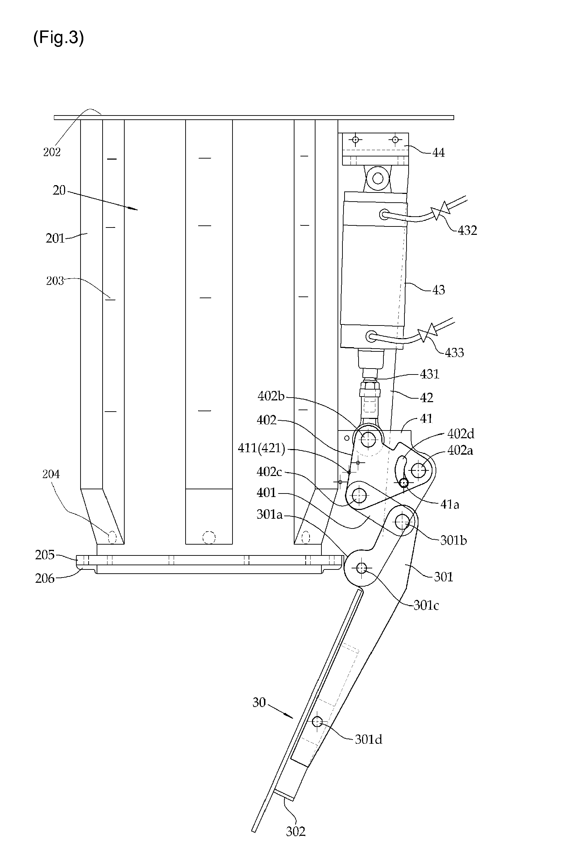

The chute 20 including the airline 201 with the upper air inlet 202, the middle air outlet 203 and the lower air outlet 204 further includes a flange 205 with a rubber packing 206 fixedly installed at its lower end. When the chute 20 is closed by the waste discharge valve 30 including the damper arm 301 and an under damper 302, the chute 20 and the under damper 302 come into contact with each other and are closed up tight. Then, the rubber packing 206 enhances airtightness. When the waste discharge valve 30 is closed, the under damper 302 closely comes into side-contact with the rubber packing 206 at a lower end of the chute 20 and is closed up tight, as illustrated in FIG. 2. When the waste discharge valve 30 is opened, the waste is allowed to freely pass from the chute 30 to the waste conveying line 50, as illustrated in FIG. 3.

The upper air inlet 202 is formed at an outer side of an upper end of the chute 20. The middle air outlet 203 is formed at an outer side of a middle part of the chute 20. The lower air outlet 204 is formed at an outer side of a lower end of the chute 20. The upper air inlet 202, the middle air outlet 203 and the lower air outlet 204 are formed at a passage formed by the outer side of the chute 20 and the airline 201. When the hinge-type waste discharge valve 30 using the cantilever is opened, the air admitted to the upper air inlet 202 flows out to the middle air outlet 203 and the lower air outlet 204 through the passage formed by the outer side of the chute 20 and the airline 201, thereby more effectively discharging the waste present in the chute 20 to the conveying line 50.

Preferably, the lower air outlet 204 formed at the outer side of the lower end of the chute 20 includes six apertures which are each about 30mm in diameter, to expedite the discharge of the waste compressed by the weight of the waste accumulated inside the chute 20. The middle air outlet 203 formed at the outer side of the middle part of the chute 20 includes twenty-four apertures which are each about 5mm in diameter, to expedite the discharge of the waste in contact with the inner side of the middle part of the chute 20.

The first link plate 402 is in the triangle shape. Around each apex of the triangle, the first link plate 402 is pivotally connected to the cylinder rod 431 of the air cylinder 43, the second link plate 401 and a link bracket 41. A slot 402d in an arc shape is formed proximately to the position where the first link plate 402 is pivotally connected to the link bracket 41. Therefore, as the first link plate 402 pivots, a pin 41 a fixedly installed at the link bracket 41 is guided within the slot 402d. Both ends of the second link plate 401 are pivotally connected to the first link plate 402 and the damper arm 301, respectively. Preferably, the shape of the second link plate 401 may be straight-shaped. The pin 4a positioned at the link bracket 41 moves within the slot 402d in the arc shape and regularly limits the angle at which the first link plate 402 is opened/closed.

In this detailed description of the present invention, the position where the first link plate 402 is connected to the link bracket 41 around one apex of the first link plate 402 is called a first connection part 402a, the position where the first link plate 402 is connected to the cylinder rod 431 of the air cylinder 43 at another apex of the first link plate 402 is called a second connection part 402b, and the position where the first link plate 402 is connected to the second link plate 401 at the other apex of the first link plate 402 is called a third connection part 402c.

In the hinge-type waste discharge valve 30 using the cantilever and comprising the damper arm 301 and the under damper 302, an upward protrusion 301 a formed at the damper arm 301 is pivotally connected to the link bracket 41. As the air cylinder 43 operates, the damper arm 301, the first link plate 402 and the second link plate 401 pivot, thereby opening/closing the waste discharge valve 30.

The under damper 302 is connected to the damper arm 301 by a third connection shaft 301d. One end of the damper arm 301 is connected to the second link plate 401 by a first connection shaft 301 b. The upward protrusion 301 a is pivotally connected to the link bracket 41 by a second connection shaft 301 c as a connection means. As the second connection shaft 301 c pivots, the under damper 302 of the waste discharge valve 30 closes or opens the chute 20.

A chute bracket 42 is fixedly connected to the outer side of the chute 20 by welding or the like. The chute bracket 42 includes three pin holes 421. These pin holes 421 are positioned to be slightly misaligned with three pin holes 411 formed on the link bracket 41. The pin 41 a is fixedly inserted into one selected from these pin holes 411 and 421. Therefore, this structure of the pin 41 a and the pin holes 411 and 421 has the function of correcting an error in manufacturing and assembling the link bracket 41 and the chute bracket 42 when the link bracket 41 is fixed to the chute bracket 42 by a bolt and it further has the function of an wedge to firmly fix the link bracket 41 to the chute bracket 42. Preferably, the number of the pin holes 411 and 412 may not need to be limited to three, respectively.

An upper end of the air cylinder 43 is connected to a cylinder bracket 44 and a lower end of the cylinder rod 431 of the air cylinder 43 is connected to the first link plate 402 in the triangle shape.

The air cylinder 43 is driven by the compressed air supplied to a compressed air pipe (not shown). When the cylinder rod 431 performs a straight-line motion downwardly as the air cylinder 43 is driven, the first link plate 402 connected to the cylinder rod 431 pivots on the first connection part 402a counterclockwise. Then, the damper arm 301 connected to the one end of the second link plate 401 connected to the first link plate 402 pivots on the second connection shaft 301 c clockwise, so that the waste discharge valve 30 with the damper arm 301 and the under damper 302 closes the chute 20.

In the embodiment of the present invention, compressed air supply valves 432 and 433 connected to the compressed air pipe are controlled by any program to operate the opening/closing cycle of the waste discharge valve 30. Compressed air applying and pressurizing time is controlled.

When the connection of the compressed air pipe to the air cylinder 43 is bad, the compression air pipe is separated from the air cylinder 43, or the air cylinder 43 malfunctions, the waste temporarily placed on the closed waste discharge valve 30 falls by its weight. Then, the waste discharge valve 30 in a close state is about to be opened by the weight of the falling waste. When the waste discharge valve 30 is opened, the center of the third connection part 402c of the first link plate 402 in the triangle shape connected to the second link plate 401 in the straight-line shape moves to the left (or counterclockwise), compared to the center line which connects the first connection part 402a of the first link plate 402 and the first connection shaft 301 b of the damper arm 301 in a straight line.

Therefore, an alternate angle is formed at the center line of a force applied to the first connection shaft 301 b of the damper arm 301 which pivots on the second connection shaft 301 c of the damper arm 301 counterclockwise, thereby preventing the second link plate 401 from bending and thus performing the locking function to prevent the waste discharge valve 30 from being open.

The pin 41 a moving within the slot 402d of the first link plate 402 has the functions of regularly limiting the opening/closing angle of the first link plate 402 and limiting the bending angle of the second link plate 401 connected to the first link plate 402, thereby limiting the maximum point of the alternate angle in the structure that the waste discharge valve 30 is closed. Based on the functions of the pin 41a including the function of limiting the alternate angle, the locking function is performed in the structure of closing the waste discharge valve 30. With the suction pressure of negative pressure (-0.5kgf/cm²) in the conveying line 50, this locking function is performed even when a suction force in an opening direction which is applied to the waste discharge valve 30 is about 980kgf and the weight of the waste present inside the chute 20 is about 264kgf to the maximum).

The locking function is released by the operation of the cylinder rod 431 performing the straight-line motion as the air cylinder 43 is driven.

When the waste discharge valve 30 is normally closed, the locking function prevents the waste discharge valve 30 from being randomly opened.

The operation of the waste discharge valve 30 will be described below:
To discharge the waste put into the chute 20 to the conveying line 50 when the waste discharge valve 30 is closed, the compressed air supply valve 433 is opened to supply the compressed air into the lower end of the air cylinder 43, so that the air cylinder 43 is driven. As the air cylinder 43 is driven, the cylinder rod 431 performs the straight-line motion and thus is inserted into the air cylinder 43. Then, the first link plate 402 in the triangle shape pivots on the first connection part 402a of the first link plate 402 clockwise, simultaneously the second link plate 401 connected to the third connection part 402c of the first link plate 402 bends, simultaneously the damper arm 301 connected to the first connection shaft 301 b of the second link plate 401 pivots on the second connection shaft 301 c of the damper arm 301 counterclockwise, and simultaneously the under damper 302 connected to the third connection shaft 301 d of the damper arm 301 pivots on the second connection shaft 301 c of the damper arm 301 counterclockwise. Then, the waste discharge valve 30 at the lower end of the chute 20 is opened.

When the waste discharge valve 30 is opened, the waste placed on the waste discharge valve 30 inside the lower end of the chute 20 drops into the conveying line 50 by its weight. The waste dropped into the conveying line 50 is conveyed to the central waste collection station of the waste collection system (waste transfer system) by the high-speed air flow inside the conveying line 50.

After the waste is discharged, the waste discharge valve 30 closes the lower end of the chute 20 by opening the compressed air supply valve 432 of the air cylinder 43 to supply the compressed air into the upper end of the air cylinder 43, thereby driving the air cylinder 43. As the air cylinder 43 is driven, the cylinder rod 431 performs the straight-line motion and thus is pushed outside the air cylinder 43. Then, the operation of the relevant constituents is opposite to that when opening the waste discharge valve 30. That is, the first link plate 402 pivots on the first connection part 402a counterclockwise, simultaneously the second link plate 401 connected to the third connection part 402c of the first link plate 402 bends, simultaneously the damper arm 301 connected to the first connection shaft 301 b of the second link plate 401 pivots on the second connection shaft 301 c clockwise, and simultaneously the under damper 302 connected to the third connection shaft 301 d of the damper arm 301 pivots on the second connection shaft 301 c of the damper arm 301 clockwise. Then, the waste discharge valve 30 closes the lower end of the chute 20.

In the waste discharge valve 30 in the waste collection system (waste transfer system), the outer side of the chute 30 and the air cylinder 43 are maximally closely in contact with each other, to maximize the space therebetween. Accordingly, the capacity size of the system is minimized and thus the capacity size of the housing 10 is minimized.

As described above, in the waste discharge valve for the vacuum-conveyance waste collection system (waste transfer system) according to the present invention, even if the operation means to open/close the waste discharge valve malfunctions, the waste discharge valve is controlled so as not to be randomly open. Therefore, since the waste temporarily stored on the waste discharge valve is prevented from dropping into the waste conveying line by its weight, it is possible to prevent the inside of the waste conveying line from being blocked. Consequently, the waste collection system (waste transfer system) is correctly operated and the system repairing cost and operation load caused when the system is blocked by the waste are reduced. Furthermore, since the chute of the waste collection system (waste transfer system) includes the airline with the upper air inlet, middle air outlet and lower air outlet, the waste present in the chute is more effectively discharged to the conveying line.

The invention has been described using preferred exemplary embodiments. However, it is to be understood that the scope of the invention is not limited to the disclosed embodiments. On the contrary, the scope of the invention is intended to include various modifications and alternative arrangements within the capabilities of persons skilled in the art using presently known or future technologies and equivalents. The scope of the claims, therefore, should be accorded the broadest interpretation so as to encompass all such modifications and similar arrangements.

## Claims

1. A waste discharge valve (30) for a vacuum-conveyance waste collection system in which a housing (10) includes an upper end on which a waste receiving opening (2) is formed and a lower end which is connected to a conveying line (50) connected to a central waste collection station, and a chute (20) is installed in the housing (10), temporality stores waste and guides the waste to the conveying line (50), the waste discharge valve (30) is installed at a lower end of the chute (20), the waste discharge valve comprising:
an air cylinder (43);
a first link plate (402) connected to one end of a cylinder rod (431) of the air cylinder (43);
a damper arm (301) for opening/closing the waste discharge valve (30) by pivot; and,
a second link plate (401) pivotally connected to the first link plate (402) and the damper arm (301), so that the opening/closing of the waste discharge valve (30) is controlled,
wherein the chute (20) includes an airline (201) with an upper air inlet (202), a middle air outlet (203) and a lower air outlet (204).

2. The waste discharge valve according to claim 1, wherein the first link plate (402) in a triangle shape is pivotally connected to a link bracket (41) about the apexes of the triangle, the link bracket (41) fixed with the cylinder rod (431) of the air cylinder (43), the second link plate (401) and a chute bracket (42) in a single unit, and the first link plate (402) includes a slot (402d) in an arc shape formed proximately to the position on which the first link plate (402) is pivotally connected to the link bracket (41), wherein as the first link plate (402) pivots, a pin fixedly installed at the link bracket (41) is guided within the slot (402d).

3. The waste discharge valve according to claim 1 or 2, wherein both ends of the second link plate (401) are pivotally connected to the first link plate and the damper arm, respectively.

4. The waste discharge valve according to any of the claims 1 to 3, wherein, as the air cylinder (43) operates, the damper arm (301) pivots, together with the first link plate (402) and the second link plate (401), thereby opening/closing the waste discharge valve (30).

5. The waste discharge valve according to any of the claims 1 to 4, wherein the housing (10) is formed with a manhole (60) for inspection in a single unit, and the manhole (60) includes an inspection opening (601) formed at an upper part of the manhole, a conveying line inspection opening (602) formed at a lower part thereof, and a waste discharge valve inspection gate (603) formed at an inner side thereof.
